# EUROPEAN PATENT SPECIFICATION

(11) **EP 0 314 072 B1**
(45) Date of publication and mention of the grant of the patent: **13.01.1993**
(21) Application number: 88117765.3
(22) Date of filing: 25.10.1988
(51) Int. Cl.: B01D 53/00, F23J 15/00, B01D 47/06

(54) **Supercooling type mist eliminator apparatus**
Apparat zur Tröpfchenabscheidung durch Unterkühlung
Matelas dévésiculeur de surfusion

(30) Priority: 30.10.1987 JP 273464/87
(43) Date of publication of application: 03.05.1989
(73) Proprietor: MITSUBISHI JUKOGYO KABUSHIKI KAISHA, Tokyo 100 (JP)
(72) Inventor: Higashi,Tsuneo Mihara Machinery Works of, Mihara-shi Hiroshima-ken (JP); Izuwa, Akio Hiroshima Technical Inst.of Mitsubishi, Nishi-ku Hiroshima-shi Hiroshima-ken (JP)
(74) Representative: Henkel, Feiler, Hänzel & Partner

(56) References cited:
- DE-A- 3 017 788
- DE-C- 423 316
- FR-A- 2 586 204
- NL-A- 7 906 682
- US-A- 3 775 948

## Description

### BACKGROUND OF THE INVENTION:

### Field of the Invention:

The present invention relates to a supercooling type mist eliminator apparatus applicable to a wet type exhaust gas desulfurization system, a dust-removing system and a dust enlarging system for use in wet type electric dust collectors.

The term "Supercooling" describes the phenomenon that, when the gases which are saturated in humidity and have different temperatures are mixed with each other quickly, the resulting (mixed) gas has a state where the moisture is exceeding that of the saturation point. Since the gas also contains dust particles which act as nuclei of condensation, the moisture exceeding the saturation point condenses at the dust particles and enlarges the mist. This mist enlarging phenomenon is called "supercooling".

### Description of the Prior Art:

Document NL-A-7906682 discloses an apparatus for regaining caloric energy from hot gas. This apparatus uses a liquid medium which is sprayed into the heat exchange chamber where the hot gas is lead through. Within the chamber, part of the gas is lead through the channel, where it does not come into contact with the liquid, and where it is not cooled. The other part of the hot gas is lead towards the outer periphery of the heat exchange chamber, where the spraying outlets are arranged. The liquid sprayed into the hot gas is heated up by the gas and simultaneously, the gas is cooled down.

The ratio of the uncooled gas flowing through the channel and the cooled gas flowing through the peripheral space can be set by means in the flow path of the uncooled gas.

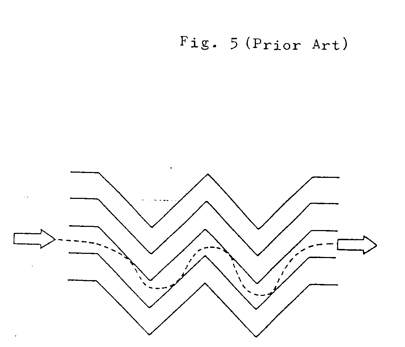

Another known wet type exhaust gas desulfurization system for coal burning thermal power, is schematically shown in Fig. 4. A wet type exhaust gas desulfurization system (hereinafter abbreviated as "desulfurization system" ) is a system normally comprising a cooling tower, an absorption tower and an eliminator. In Fig. 4, exhaust gas is introduced through an exhaust gas duct 11 into an exhaust gas reheater 1 (hereinafter abbreviated as "heat collector"), and after heat has been collected there, it is sent to a cooling tower 2, in which the dust in the exhaust gas is removed by spraying coolant water, and also the exhaust gas is humidified and cooled. Thereafter, the exhaust gas is led to an absorption tower 3, in which SO₂ contained in the exhaust gas is absorbed and removed by an absorbent liquid. Subsequently, after gypsum mist generated in the absorption tower 3 has been removed in an eliminator 4, residual dust in the exhaust gas is removed in a wet type electric dust collector 5. In succession, in another exhaust gas reheater 6 (hereinafter abbreviated as "reheater"), the exhaust gas is heated and raised in temperature by the heat collected by the heat collector 1, and then it is exhausted to the atmosphere through a stack. It is to be noted that a dust concentration in the outlet exhaust gas of the eliminator 4 cannot be reduced to 10 mg/m³ at 0°C and 1 atm or less because removal of micro-fine particles is difficult in the eliminator. Therefore, in order to reduce the dust concentration in the exhaust gas exhausted to the atmosphere to less than 10 mg/m³ at 0°C at 1 atm, dust is further removed by means of the wet type dust collector 5. In addition, for the purpose of removing gypsum mist of the absorption tower 3 which would deposit on a crimped-plate-shaped elements of the eliminator 4 as shown in Fig. 5, water supplied externally of the system through a pipe 9 is sprayed over the elements through spray nozzles, and after having removed the gypsum deposited on the element, this spray water is fed to the cooling tower 2 through a pipe 10 and serves as supplementary water for the coolant water evaporated and dissipated into the exhaust gas.

In the crimped-plate type mist eliminator in the prior art, it is difficult to effectively remove dust having a micro-fine particle diameter, and in the case of the above-described known desulfurization system also, in order to reduce a dust concentration in the exhaust gas at the outlet of the eliminator to 10 mg/m³ at 0°C and 1 atm or less, dust removal is further effected by means of a wet type electric dust collector, resulting in a problem that plant and equipment investment is increased, a broad site is necessitated and a running cost also becomes large.

Also, there is a problem that large amounts of externally supplied water are required both to wash out dust or gypsum deposited on the elements of the eliminator, and as makeup coolant water to the cooling tower. This leads to large amounts of drain water to be handled. Water consumption cannot be reduced without the risk of build ups of gypsum causing blockages in the elements.

### SUMMARY OF THE INVENTION:

The present invention has been worked out in view of the above-mentioned current status of the art, and the invention has it as an object to provide a novel mist eliminator apparatus, in which dust and mist having a minute particle diameter can be effectively removed, furthermore washing of the mist eliminator as well as feeding of supplementary water to the cooling tower can be achieved almost without relying upon supplementary water supplied externally of the system, and thereby the amount of water supplied externally of the system can be reduced.

According to one feature of the present invention, there is provided a supercooling type mist eliminator apparatus provided with a crimped-plate type mist eliminator for removing particles of dust and mist contained in a wet exhaust gas by inertial collision means, which comprises exhaust gas cooling means disposed upstream of the crimped-plate type mist eliminator and including supercooling elements and non-cooling sections alternately disposed adjacent to one another via a gas passageway partition plate along a plane perpendicular to the direction of a gas flow in a gas passageway, and exhaust gas mixing means disposed upstream of the crimped-plate type mist eliminator and just behind and close to the exhaust gas cooling means.

According to the present invention, in a mist eliminator apparatus available in a desulfurization system or the like, a novel structure is employed such that there are provided exhaust gas cooling means for further cooling a part of saturated exhaust gas and exhaust gas mixing means disposed downstream of the exhaust gas cooling means for quickly mixing the residual saturated exhaust gas that is not cooled with the above-mentioned cooled saturated exhaust gas, and dust and/or mist having its particles enlarged by the mixing is fed to a crimped-plate type mist eliminator to be removed, the exhaust gas is brought into a supersaturated condition by mixing an uncooled saturated exhaust gas with a cooled saturated exhaust gas, so that steam in the exhaust gas may condense on the surface of the dust particles in the exhaust gas serving as nuclei of condensation, resulting in enlargement of the particle diameters of the mist. The thus enlarged mist particles can be more effectively captured and removed by the crimped-plate type mist eliminator, micro-fine dust particles in the exhaust gas can be also removed jointly with the enlarged mist particles, and therefore, the dust concentration of the exhaust gas at the outlet of a desulfurization system can be reduced, for example, to 10 mg/m³ at 0°C and 1 atm or less without making use of a wet type electric dust collector. In addition, recovered water cooled and condensed in this mist eliminator can be resprayed in a large amount at the exhaust gas cooling means of the mist eliminator or in the crimped-plate type mist eliminator, thereby deposition of dust and gypsum mist can be perfectly eliminated, still further this recovered water can be supplemented to fresh water supplied to the cooling tower, and thereby minimization of an amount of disposal of drain water can be achieved.

The above-mentioned and other objects, features and advantages of the present invention will become more apparent by reference to the following description of one preferred embodiment of the present invention taken in conjunction with the accompanying drawings.

### BRIEF DESCRIPTION OF THE DRAWINGS:

In the accompanying drawings:
Fig. 1 is a schematic view of one preferred embodiment of the present invention;
Fig. 2 is a schematic view of a wet type exhaust gas desulfurization system provided with a supercooling type mist eliminator apparatus according to the present invention;
Fig. 3 is a phase diagram of an exhaust gas represent on a temperature-humidity diagram to be preferred to for understanding an operation principle of the present invention;
Fig.4 is a schematic view of a wet type exhaust gas desulfurization system in the prior art; and
Fig. 5 is a schematic view showing elements of a known crimped-plate type mist separator.

### DESCRIPTION OF THE PREFERRED EMBODIMENT:

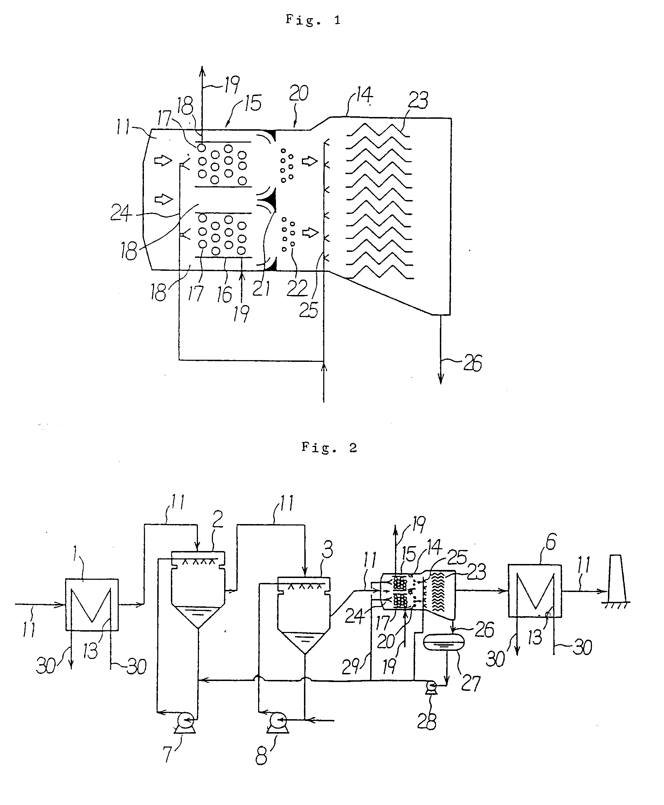

Now, one preferred embodiment of the present invention will be described with reference to Figs. 1 to 3.

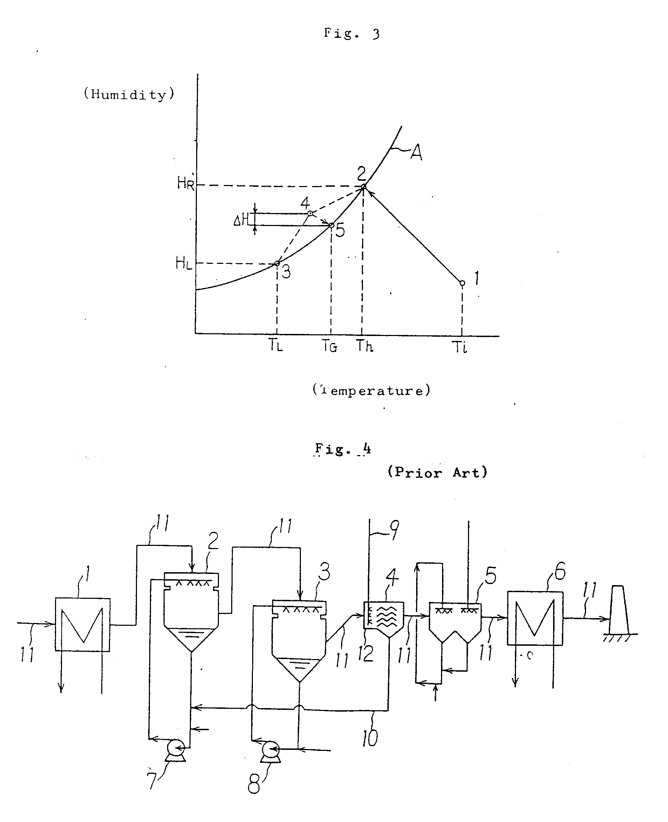

In Fig. 2, a coal fired exhaust gas exhausted from a boiler enters through an exhaust gas duct 11 into a heat collector 1, in which the exhaust gas heats up a thermal medium water within a heat transfer tube 13 and raises its temperature, then after having been cooled to 90° - 100°C the exhaust gas enters a cooling tower 2, in which a coolant water fed by means of a circulation pump 7 is sprayed into the exhaust gas, hence the exhaust gas is humidified and cooled and has dust removed, and it transfers from state 1 to state 2 in the diagram shown in Fig. 3. SO₂ in this exhaust gas is absorbed by an absorbent liquid fed by means of an absorption tower circulation pump 8 and sprayed into the exhaust gas in the subsequent absorption tower 3. Subsequently, the exhaust gas is introduced into a supercooling type mist eliminator 14 according to the present invention. The supercooling type mist eliminator 14 according to the present invention will be explained in greater detail with reference to Fig. 1. In Fig. 1, reference numeral 15 designates exhaust gas cooling means disposed upstream of a crimped-plate type mist separator 23 with respect to the direction of a gas flow, reference numeral 16 designates a gas passageway partition plate in the exhaust gas cooling means 15, numeral 17 designates supercooling elements perpendicular to the direction of a gas flow in a gas flow passageway, numeral 18 designates non-cooling sections adjacent to the supercooling elements 17 via the gas passageway partition plate 16, the above-mentioned supercooling elements 17 and the non-cooling sections 18 are alternately disposed adjacent to one another via a gas passageway partition plate along a plane perpendicular to the direction of a gas flow, and a coolant water pipe 19 is connected to the above-described supercooling elements 17. In addition, reference numeral 20 designates exhaust gas mixing means disposed upstream of the crimped-plate type mist separator 23 and just behind the exhaust gas cooling means 15, and reference numeral 21 designates a gas mixer in the exhaust gas mixing means, which gas mixer includes a mechanism for diverting a gas flow emanating from the non-cooling section 18 in the exhaust gas cooling means 15 so as to intersect with a gas flow emanating from the supercooling elements 17, as shown in Fig. 1. Reference numeral 22 designates a rod type gas mixer disposed close to the gas mixer 21, in the rod type gas mixer 22 are horizontally disposed a plurality of rods so as to intersect with a gas flow as shown in Fig. 1, and thereby turbulence is produced in the gas flow to promote mixing of gases. Reference numeral 24 designates spray nozzles disposed upstream of and close to the exhaust gas cooling means 15 for washing the exhaust gas cooling means 15, and numeral 25 designates spray nozzles just in front of the crimped-plate type mist separator 23 for washing the crimped-plate type mist separator 23. A part of the exhaust gas having flowed into the supercooling type mist eliminator 14 passes through the supercooling elements to which coolant water is fed through a coolant water pipe 19, where the exhaust gas is dehumidified and cooled, and transfers from state 2 to state 3 along a saturation curve A in the diagram shown in Fig. 3.

On the other hand, the residual exhaust gas passes through the non-cooling section 18. The cooled exhaust gas (state 3 in the diagram shown in Fig. 3) and the uncooled exhaust gas (state 2 in the diagram in Fig. 3) are quickly mixed by the gas mixer 21 and the rod type gas mixer 22 in the exhaust gas mixing means 20, and the state 4 in the diagram in Fig. 3, that is, a supersaturated state is established. In the mixed exhaust gas at the supersaturated state, steam corresponding to ΔH in the graph in Fig. 3 condenses and grows on the surfaces of the dust particles using dust in the exhaust gas as nuclei of condensation, and thereby particle diameters of the dust are enlarged. On the other hand, the exhaust gas transfer from state 4 to state 5 in the diagram shown in Fig. 3. The enlarged dust particles enter into the crimped-plate type mist separator 23, and are removed by inertial collision. Also, condensate water produced in the exhaust gas cooling means 15 and condensate water produced by the gas mixing means are collected and come to a condensate water pipe 26.

In Fig. 2, the collected condensate water is accumulated in a condensate water tank 27, then it is sprayed from spray nozzles to the supercooling elements 17 and to the crimped-plate type mist separator 23 through a condensate water pipe 29 by means of a condensate water pump 27, to remove the deposited gypsum mist and dust, and the sprayed condensate water is also collected again.

Thereafter, the exhaust gas enters in the reheater 6, in which thermal medium water raised in temperature in the heat collector 1 and supplied through a thermal medium pipe 30 enters in the heat transfer tube 13 to heat the exhaust gas up to a predetermined temperature, and then it is exhausted into the atmosphere through a stack.

By installing the apparatus according to the present invention, a dust concentration in the outlet exhaust gas of the desulfurization system can be reduced to a predetermined value, so that it is unnecessary to further provide a wet type electric dust collector downstream of the system as is the case with the prior art system.

In addition, there is an advantage that in the supercooling type mist eliminator apparatus the condensate water condensed in the exhaust gas and collected can be effectively utilized for washing of the supercooling type mist eliminator, and also it can be used as supplementary water fed to the cooling tower.

As described in detail above, with the supercooling type mist eliminator apparatus according to the present invention, the following advantages are obtained:
(1) Since a dust concentration in an outlet exhaust gas of a desulfurization system or the like can be greatly reduced by installing the supercooling type mist eliminator apparatus, a wet type electric dust collector becomes unnecessary, great reduction of initial plant and equipment investment, narrowing of a site area, and reduction of a running cost can be realized.
(2) Since condensate water produced in the supercooling type mist eliminator apparatus can be collected and utilized to be sprayed over a mist separator for washing deposited dust, gypsum, etc., and also it can be utilized as supplementary water for a cooling tower, saving of a running cost as well as countermeasure against shortage of water can be achieved.

## Claims

1. A supercooling type mist eliminator apparatus provided with a crimped-plate type mist eliminator (23) for removing particles of dust and mist contained in a wet exhaust gas by inertial collision means, characterized in that said apparatus comprises exhaust gas cooling means (15) disposed upstream of said crimped-plate type mist eliminator (23) and including supercooling elements (17) and non-cooling sections (18) alternately disposed adjacent to one another via a gas passageway partition plate (16) along a plane perpendicular to the direction of a gas flow in a gas passageway, and exhaust gas mixing means (20) disposed upstream of said crimped-plate type mist eliminator (23) and just behind and close to said exhaust gas cooling means (15).

## Patentansprüche

1. Vorrichtung zur Tröpfchenabscheidung durch Unterkühlung mit einem kräuselplattenartigen Tröpfchenabscheider (23), um Staub- und Dunstteilchen, die in einem nassen Abgas enthalten sind, durch Trägheitsanprallmittel zu entfernen, dadurch gekennzeichnet, daß die Vorrichtung eine Abgaskühleinrichtung (15), die aufstromseitig zu dem kräuselplattenartigen Tröpfchenabscheider (23) angeordnet ist und längs einer zur Richtung des Gasflusses senkrechten Ebene in einem Gasdurchgang abwechselnd Unterkühlungselemente (17) und an diese anschließende, durch eine Gasdurchgangstrennplatte (16) verbundene, nicht-kühlende Abschnitte (18) enthält, und eine Abgasmischeinrichtung (20) aufweist, die aufstromseitig zu dem kräuselplattenartigen Tröpfchenabscheider (23) direkt hinter und dicht bei der Abgaskühleinrichtung (15) angeordnet ist.

## Revendications

1. Un appareil d'élimination de buée du type à refroidissement poussé équipé d'un éliminateur de buée (23) du type à plaque plissée pour retirer les particules de poussière et de buée contenues dans un gaz d'échappement humide par des moyens de collision à inertie, caractérisé en ce que ledit appareil comporte un moyen de refroidissement (15) du gaz d'échappement situé en amont dudit éliminateur de buée (23) à plaque plissée, et comprenant des éléments de refroidissement poussé (17) et des parties non-refroidissantes (18) disposées alternativement adjacents les uns aux autres via une plaque (16) de répartition de passage du gaz le long d'un plan perpendiculaire à la direction d'écoulement du gaz dans le couloir de passage du gaz, et des moyens de mélange des gaz d'échappement (20) disposés en amont dudit éliminateur de buée (23) à plaque plissée et à proximité juste derrière lesdits moyens de refroidissement (15) du gaz d'émission.
